# EUROPÄISCHE PATENTSCHRIFT

(11) **EP 0 524 951 B1**
(45) Veröffentlichungstag und Bekanntmachung des Hinweises auf die Patenterteilung: **01.06.1994**
(21) Anmeldenummer: 91905802.4
(22) Anmeldetag: 23.03.1991
(51) Int. Cl.: G01F 1/68, G01P 5/12, H01L 21/306

(54) **VERFAHREN ZUM AUFBAU VON MIKROMECHANISCHEN SENSOREN**
PROCESS FOR MANUFACTURING MICRO-MECHANICAL SENSORS
PROCEDE POUR LA CONFECTION DE CAPTEURS MICROMECANIQUES

(30) Priorität: 14.04.1990 DE 4012080
(43) Veröffentlichungstag der Anmeldung: 03.02.1993
(73) Patentinhaber: ROBERT BOSCH GMBH, 70442 Stuttgart (DE)
(72) Erfinder: MAREK, Jiri, D-7410 Reutlingen 22 (DE)
(86) Internationale Anmeldenummer: DE9100260
(87) Internationale Veröffentlichungsnummer: WO9116604

(56) Entgegenhaltungen:
- WO-A-89/03512
- WO-A-89/05963
- US-A- 4 784 721
- US-A- 4 822 755
- US-A- 4 867 842
- US-A- 4 961 821

## Beschreibung

Stand der Technik

Die Erfindung geht aus von einem Verfahren zum Aufbau eines Sensors nach der Gattung des Hauptanspruchs (siehe WO-A-89/05963).

Bei den herkömmlichen Verfahren werden die aus einem Wafer strukturierten Sensorelemente durch Sägen von dem Wafer abgetrennt. Die dabei entstehenden seitlichen Begrenzungswände der Sensorelemente stehen senkrecht zur Waferoberfläche. Die Montage von mikromechanischen Sensorelementen erfolgt durch Kleben, Löten oder Anglasen auf ein Substrat je nach Beschaffenheit und Material von Sensorelement und Substrat. Die elektrischen Anschlüsse des Sensorelements werden zu außen liegenden Metallbahnen gebondet.

In der US 4 822 755 wird ein Verfahren zum Zerteilen von Wafern gelehrt, bei dem durch die Verbindung von reaktivem Ionenätzen und anisotropem naßchemischem Ätzen Chips hergestellt werden, die besonders glatte Kanten haben und daher präzise zusammengefügt werden können, um große Chipflächen herzustellen. Dabei werden gleichartige Chips zusammengefügt, um beispielsweise eine Vielzahl von Tintenstrahldüsen zu einer langen Zeile zusammenzufügen. Diese Druckschrift befaßt sich jedoch nicht mit dem Aufbau von Luftmassensensoren. Weiterhin wird darin nicht gelehrt, eine Öffnung in einen zweiten Wafer einzubringen, wobei die Öffnung entsprechend der geometrischen Abmessungen des Sensorelements dimensioniert ist. Weiterhin wird nicht gelehrt, das Sensorelement in die Öffnung einzusetzen und daß der Wafer durch eine Vergrößerung der Oberfläche in mindestens einer Achse eine laminare Strömung auf der Oberfläche gewährleistet.

In der WO-A-89/05963 wird ein Sensor zur Messung einer Luftströmung beschrieben, der aus einem Siliziumwafer durch anisotrope Ätztechniken herausstrukturiert ist. Der Sensor weist einen Rahmen aus einkristallinem Silizium auf, in dem eine dielektrische Membran aufgespannt ist, auf der ein Heizer und ein Temperaturfühler gelegen sind. In Abhängigkeit von der Menge der vorbeiströmenden Luft wird die aufgeheizte Membran abgekühlt. Durch Messung der Temperatur kann so die vorbeiströmende Luftmenge bestimmt werden. In der Figur 4 wird gezeigt, daß dieser Sensor mit einem keramischen Substrat verbunden wird.

### Vorteile der Erfindung

Das erfindungsgemäße Verfahren mit den kennzeichnenden Merkmalen des Hauptanspruchs hat den Vorteil, daß das Sensorelement schon während der Strukturierung mittels anisotropen Ätzens im wesentlichen vom Wafer abgetrennt wird, bis auf Stege, die das Sensorelement während des Herstellungsprozesses in einer definierten Lage halten. Vorteilhaft in diesem Zusammenhang ist, daß die sich ausbildenden seit-lichen Begrenzungswände des Sensorelements definierte Winkel mit der Waferoberfläche bilden, je nach Kristallorientierung des Wafers, und sehr glatt sind. Ein wesentlicher Vorteil des Verfahrens besteht außerdem in der Möglichkeit, die Strukturierung des Sensorelements, zum Beispiel eine Membranätzung, im gleichen Prozeßschritt durchzuführen. Ein zweiter Wafer wird so strukturiert, daß eine Öffnung entsteht, in die das Sensorelement exakt hineinpaßt. Die erforderliche Genauigkeit bei der Dimensionierung von Sensorelement und Öffnung läßt sich bei Siliziumwafern mit derselben Kristallorientierung besonders einfach durch anisotropes Ätzen erreichen, da dabei die kristallographischen Gegebenheiten vorteilhaft ausgenutzt werden.

Durch die in den Unteransprüchen aufgeführten Maßnahmen sind vorteilhafte Weiterbildungen des im Hauptanspruch angegebenen Verfahrens möglich. Ferner werden vorteilhafte Anwendungen des erfindungsgemäßen Verfahrens aufgeführt. Besonders vorteilhaft für einige Anwendungen ist es, das Sensorelement so in die Öffnung eines zweiten Wafers einzusetzen, daß eine homogene Oberfläche entsteht, die keine Stufen beim Übergang zwischen Sensorelement und dem zweiten Wafer aufweist. Dies wird auf vorteilhafte Weise dadurch erreicht, daß das Sensorelement aus einem ersten Wafer strukturiert wird, der von gleicher Dicke ist wie der zweite Wafer aus dem die Öffnung strukturiert wird. Durchdringt die Öffnung den zweiten Wafer vollständig und weist das Sensorelement volle Waferdicke auf, so läßt sich bei entsprechender Längen- und Breitendimensionierung der Öffnung und des Sensorelements einfach eine homogene Oberfläche realisieren. Besonders vorteilhaft läßt sich dieses Verfahren bei der Herstellung von mikromechanischen Luftmassensensoren anwenden. In diesem Fall ist eine homogene, laminare Strömung über der Sensorfläche verlangt. Stufen, auch im Bereich von einigen 10 »m, erzeugen Turbulenzen, die das Meßsignal störend beeinflussen. Mit Hilfe des erfindungsgemäßen Montageverfahrens läßt sich eine Sensoroberfläche herstellen, die die erforderliche Homogenität aufweist.

### Zeichnung

Ausführungsbeispiele der Erfindung sind in der Zeichnung dargestellt und in der nachfolgenden Beschreibung näher erläutert.

Es zeigen Figur 1 die Aufsicht auf einen Waferausschnitt nach dem Strukturieren, Figur 2 einen Schnitt durch einen strukturierten Wafer vor dem Einsetzen eines Sensorelements und Figur 3 die Aufsicht auf einen Sensor.

### Beschreibung des Ausführungsbeispiels

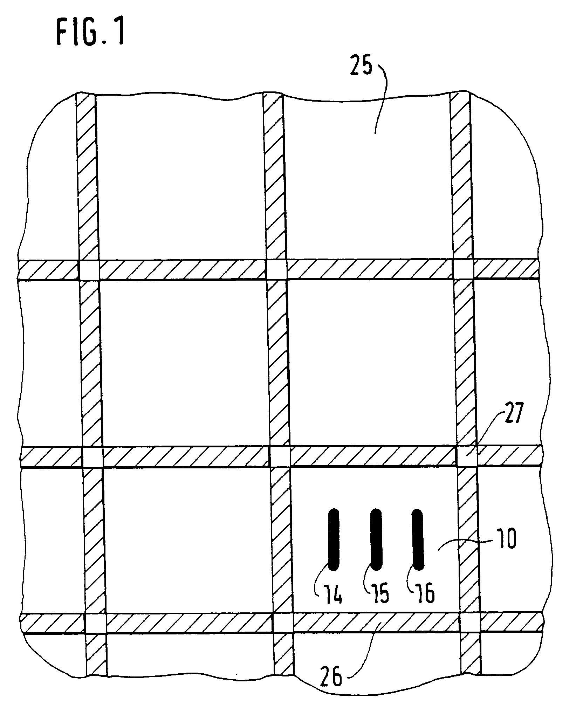

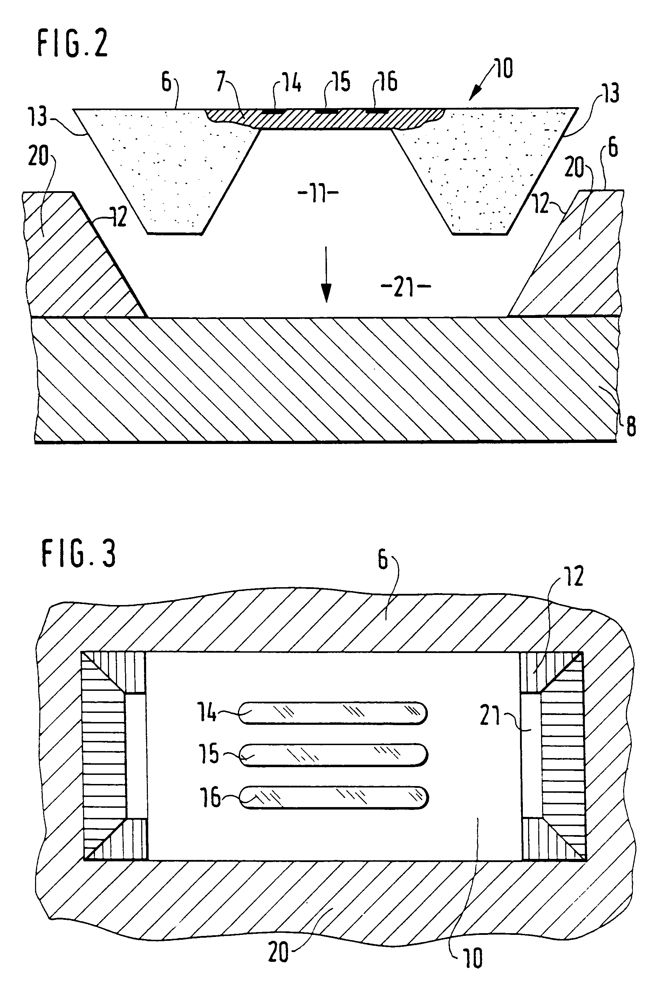

In Figur 1 ist mit 25 ein Wafer bezeichnet, aus dem gleichartige Sensorelemente 10 herausstrukturiert sind, auf die elektronische Schaltungselemente aufgebracht sind und von denen im folgenden beispielhaft eines beschrieben wird. Das Sensorelement 10 weist an seiner Oberfläche drei Widerstände 14, 15 und 16 auf, die im Verlauf der Beschreibung von Figur 2 näher erläutert werden. Bei der Verwendung von Siliziumwafern mit (100)- oder (110)-Kristallorientierung lassen sich in der Mikromechanik übliche Strukturen, wie Paddel, Zungen oder Membranen, günstig durch anisotropes elektrochemisches Ätzen erzeugen. Da die Herstellung von Chips, die elektronische Schaltungselemente enthalten, sehr kostenintensiv ist, versucht man, bei der Prozessierung aus einem Wafer möglichst viele Chips zu fertigen, d. h. die Chips möglichst klein zu halten. Das erfindungsgemäße Verfahren erlaubt eine Größenreduktion der Sensorelemente auch unter die funktionsbedingten Abmessungen hinaus, wozu allerdings eine exakte Definition der Seitenwände der Sensorelemente erforderlich ist. Deshalb erfolgt das Abtrennen des Sensorelementes 10 vom Wafer 25 und den übrigen Sensorelementen nicht durch Sägen oder Brechen, sondern in zwei Schritten: Während des anisotropen elektrochemischen Ätzprozesses zur Strukturierung des Sensorelementes 10 werden außerdem die seitlichen Begrenzungswände des Sensorelementes 10 geätzt, so daß ein Ätzgraben 26 entsteht, der den Wafer 25 vollständig durchdringt, und das Sensorelement 10 nur noch durch dünne Stege 27 mit dem Wafer 25 und den anderen Sensorelementen verbunden ist. Die Stege gewährleisten eine definierte Lage der Sensorelemente während der Prozessierung. Zur endgültigen Vereinzelung der Sensorelemente werden die Stege zertrennt, was beispielsweise durch Sägen oder Brechen erfolgen kann. Beim anisotropen Ätzen der seitlichen Begrenzungswände des Sensorelementes 10 bilden sich neben sehr glatten Oberflächen die für die Kristallorientierung des Wafers 25 charakteristischen Winkel zwischen den ätzbegrenzenden Seitenwänden und der Waferoberfläche automatisch aus.

In Figur 2 ist ein Sensor zur Messung von Gas- bzw. Luftmassen im Querschnitt dargestellt, der sich günstig nach dem erfindungsgemäßen Verfahren aufbauen läßt. Mit 10 ist ein Sensorelement bezeichnet, das aus einem in Figur 1 dargestellten Wafer 25 herausstrukturiert ist. Das Sensorelement 10 weist an seiner Oberfläche 6 drei Widerstände 14, 15 und 16 auf, von denen mindestens zwei temperaturabhängig sind. Die mindestens zwei Widerstände 14 und 16 sind beheizbar, in diesem Beispiel durch den Widerstand 15, der das ihn umgebende Material aufheizt. Um die thermische Masse der Umgebung des Widerstandes 15 möglichst klein zu halten, ist die Dicke des Sensorelements 10 im Bereich der Widerstände 14, 15 und 16 reduziert, wodurch eine Kaverne 11 entstanden ist. Das Sensorelement 10 soll in eine Öffnung 21 eines Wafers 20 eingepaßt werden, was durch den Pfeil angedeutet ist. Die Öffnung 21 durchdringt den Wafer 20 vollständig und ist so dimensioniert, daß das Sensorelement 10 an zumindest zwei gegenüberliegenden Flanken 13 exakt hinein paßt und in dieser Richtung keine Stufen in der Oberfläche 6 beim Übergang zwischen dem Sensorelement 10 und dem Wafer 20 auftreten. Der Wafer 20 ist auf ein Substrat 8 aufgebracht. Dabei kann es sich beispielsweise um ein Keramik- oder Metallsubstrat handeln.

Der in diesem Beispiel dargestellte Wafer 20 hat dieselbe Kristallorientierung wie das Sensorelement 10. Da sowohl die Öffnung 21 als auch die seitlichen Begrenzungswände des Sensorelements 10 durch anisotropes Ätzen entstanden sind, weisen die Flanken 12 der Öffnung 21 und die Flanken 13 des Sensorelementes 10 dieselbe definierte Steilheit auf. Mit 7 ist ferner eine Dotierung bezeichnet, die als Ätzstop dient und das Durchätzen des Sensorelementes 10 im Bereich der Kaverne 11 verhindert.

Die Funktionsweise des in Figur 2 und 3 dargestellten Luftmassensensors läßt sich wie folgt erläutern: Über die Oberfläche 6 mit den Widerständen 14, 15 und 16 wird ein möglichst homogener, laminarer Luft- bzw. Gasstrom geleitet. Durch Wärmetransport durch das Gas entsteht an den Widerständen 14, 15 und 16 ein Temperaturgradient, der eine Änderung der Widerstandswerte der Widerstände 14, 15 und 16 bewirkt und ausgewertet werden kann. Zur Vermeidung von Turbulenzen, die eine Deutung des Meßsignals erschweren, ist eine extrem homogene Sensorfläche 6 erforderlich.

In Figur 3 ist die Sensoroberfläche 6 mit dem Wafer 20, dem Sensorelement 10 und den Widerständen 14, 15 und 16 dargestellt. Um eine laminare Strömung auf der Sensoroberfläche 10 zu gewährleisten, muß die Sensoroberfläche eine gewisse Mindest-Größe aufweisen. Bei dem erfindungsgemäßen Verfahren läßt sich dies kostengünstig durch den strukturierten Wafer 20 erreichen, der als Rahmen für das eigentliche Sensorelement dient. Trotz eines kleinen und somit kostengünstigen Sensorelements wird durch den Einbau in Wafer 20 eine große Sensoroberfläche erreicht. In diesem Beispiel ist das Sensorelement 10 so in den Wafer 20 eingepaßt, daß es nur an zwei gegenüberliegenden Kanten exakt mit dem Wafer 20 abschließt, so daß ein Gasstrom, der senkrecht zu diesen Kanten über den Sensor geleitet wird, nicht durch Unebenheiten in der Sensoroberfläche 6 verwirbelt wird. Entsprechend sind auch die Widerstände 14, 15 und 16 in dieser Richtung hintereinander angeordnet.

## Patentansprüche

1. Verfahren zum Aufbau eines Luftmassensensors, bei dem mindestens ein Sensorelement aus einem ersten Wafer strukturiert wird, das Sensorelement vom ersten Wafer getrennt wird und auf ein Substrat aufgebracht wird, dadurch gekennzeichnet, daß bei der Strukturierung des Sensorelements (10) aus einem ersten Wafer (25) mittels anisotropen Ätzens außenliegende Ränder (13) des Sensorelements (10) anisotrop geätzt werden, so daß das Sensorelement (10) mit dem ersten Wafer (25) nur durch dünne Stege (27) verbunden ist, daß in einem zweiten Wafer (20) mindestens eine Öffnung (21) mittels anisotropen Ätzens eingebracht wird, daß die Öffnung (21) entsprechend der geometrischen Abmessungen des Sensorelements (10) dimensioniert wird, daß das Sensorelement (10) in die Öffnung (21) des zweiten Wafers (20) eingesetzt wird und daß der zweite Wafer (20) die Abmessung der Oberfläche des Sensors in mindestens einer Achse so weit vergrößert, daß in dieser Achse eine laminare Strömung auf der Oberfläche gewährleistet ist.

2. Verfahren nach Anspruch 1, dadurch gekennzeichnet, daß das Sensorelement (10) dieselbe Dicke hat wie der zweite Wafer (20) und daß beim Ätzen der Öffnung (21) der Wafer (20) vollständig durchgeätzt wird.

3. Verfahren nach Anspruch 1 oder 2, dadurch gekennzeichnet, daß das Sensorelement (10) so in die Öffnung (21) des zweiten Wafers (20) eingesetzt wird, daß eine plane Oberfläche (6) entsteht.

4. Verfahren nach einem der vorhergehenden Ansprüche, dadurch gekennzeichnet, daß als erster Wafer (25) und als zweiter Wafer (20) Siliziumwafer mit (100)-Kristallorientierung oder (110)-Kristallorientierung verwendet werden.

5. Sensor zur Messung von Luftmassen, mit mindestens einem elektronische Bauteile tragenden Sensorelement, das durch elektro-chemisches Ätzen aus einem ersten Wafer strukturiert ist, dadurch gekennzeichnet, daß die seitlichen Begrenzungswände (13) des Sensorelements (10) anisotrop geätzt sind, daß das Sensorelement (10) in eine Öffnung (21) in einem zweiten Wafer (20) bündig eingesetzt ist, daß die Öffnung (21) durch anisotropes naßchemisches Ätzen in den zweiten Wafer (20) eingebracht ist, und daß der zweite Wafer (20) die Abmessung der Oberfläche des Sensors in mindestens einer Achse so weit vergrößert, daß in dieser Achse eine laminare Strömung auf der Oberfläche gewährleistet ist.

6. Sensor nach Anspruch 5, dadurch gekennzeichnet, daß an der Oberfläche (6) des Sensorelements (10) mindestens ein temperaturabhängiger Widerstand (14, 15, 16) angeordnet ist.

7. Sensor nach Anspruch 6, dadurch gekennzeichnet, daß Mittel zum Aufheizen des mindestens einen Widerstandes (14, 15, 16) vorhanden sind.

8. Sensor nach Anspruch 6 oder 7, dadurch gekennzeichnet, daß Mittel zur Auswertung der Widerstandsänderung des mindestens einen Widerstandes (14, 15, 16) vorhanden sind.

9. Sensor nach einem der Ansprüche 5 bis 8, dadurch gekennzeichnet, daß das Sensorelement (10) in dem Bereich, in dem der mindestens eine Widerstand (14, 15, 16) angeordnet ist, in seiner Dicke reduziert ist.

## Claims

1. Method of constructing an air flow rate sensor in which at least one sensor element is formed by structuring from a first wafer, the sensor element is separated from the first wafer and is deposited on a substrate, characterized in that, during the formation of the sensor element (10) by structuring from a first wafer (25) by means of anisotropic etching, external edges (13) of the sensor element (10) are anisotropically etched in such a way that the sensor element (10) is joined to the first wafer (25) only by thin webs (27), in that at least one opening (21) is introduced into a second wafer (20) by means of anisotropic etching, in that the opening (21) is dimensioned in accordance with the geometrical dimensions of the sensor element (10), in that the sensor element (10) is inserted in the opening (21) of the second wafer (20), and in that the second wafer (20) increases the dimensions of the surface of the sensor in at least one axis to such an extent that a laminar flow over the surface is ensured along said axis.

2. Method according to Claim 1, characterized in that the sensor element (10) has the same thickness as the second wafer (20) and in that, when the opening (21) is etched, the wafer (20) is completely etched through.

3. Method according to Claim 1 or 2, characterized in that the sensor element (10) is inserted in the opening (21) of the second wafer (20) in such a way that a flat surface (6) is produced.

4. Method according to one of the preceding claims, characterized in that silicon wafers having (100) crystal orientation or (110) crystal orientation are used as first wafer (25) and as second wafer (20).

5. Sensor for measuring air flow rates, having at least one sensor element which supports electronic components and which has been formed by structuring from a first wafer as a result of electrochemical etching, characterized in that the lateral boundary walls (13) of the sensor element (10) are anisotropically etched, in that the sensor element (10) is inserted in a flush manner into an opening (21) in a second wafer (20), in that the opening (21) is introduced into the second wafer (20) by anisotropic wet-chemical etching, and in that the second wafer (20) increases the dimensions of the surface of the sensor in at least one axis to such an extent that a laminar flow over the surface is ensured along said axis.

6. Sensor according to Claim 5, characterized in that at least one temperature-sensitive resistor (14, 15, 16) is disposed on the surface (6) of the sensor element (10).

7. Sensor according to Claim 6, characterized in that means are present for heating the at least one resistor (14, 15, 16).

8. Sensor according to Claim 6 or 7, characterized in that means are present for evaluating the change in resistance of the at least one resistor (14, 15, 16).

9. Sensor according to one of Claims 5 to 8, characterized in that the thickness of the sensor element (10) is reduced in the region in which the at least one resistor (14, 15, 16) is disposed.

## Revendications

1. Procédé pour la construction d'un capteur de masse d'air dans le cas duquel au moins un élément de capteur est structuré en une première tranche, l'élément de capteur est séparé de la première tranche (pastille) et est déposé sur un substrat, caractérisé en ce que lors de la structuration de l'élément de capteur (10) à partir d'une première tranche (25) au moyen d'un décapage anisotrope des bords (13), situés à l'extérieur, de l'élément de capteur (10) sont décapés de façon anisotrope, de telle sorte que l'élément de capteur (10) soit relié à la première tranche (25) seulement par de minces entretoises (27), en ce que dans une deuxième tranche (20) en pratique au moins une ouverture (21) est pratiquée au moyen d'un décapage anisotrope, en ce que l'ouverture (21) est dimensionnée en fonction des dimensions géométriques de l'élément de capteur (10), en ce que l'élément de capteur (10) est inséré dans l'ouverture (21) de la deuxième tranche (20) et en ce que la deuxième tranche (20) augmente la dimension de la surface du capteur dans au moins un axe suffisamment grand pour que dans cet axe on ait l'assurance d'avoir un écoulement laminaire sur la surface.

2. Procédé selon la revendication 1, caractérisé en ce que l'élément de capteur (10) a la même épaisseur que la deuxième tranche (20) et en ce que lors du décapage de l'ouverture (21) la tranche (20) est complètement décapée.

3. Procédé selon la revendication 1 ou 2, caractérisé en ce que l'élément de capteur (10) est inséré dans l'ouverture (21) de la deuxième tranche (20), de telle façon que l'on ait une surface plane (6).

4. Procédé selon l'une des revendications précédentes, caractérisé en ce que l'on utilise comme première tranche (25) et comme deuxième tranche (20) des tranches de silicium avec une orientation des monocristaux (100) ou une orientation des monocristaux (110).

5. Capteur pour mesurer des masses d'air, avec au moins un élément de capteur portant des composants électroniques, qui est structuré par décapage électro-chimique à partir d'une première tranche, caractérisé en ce que les parois latérales de délimitation (13) de l'élément de capteur (10) sont décapés de façon anisotrope, en ce que l'élément de capteur (10) est inséré à fleur dans une deuxième tranche (20), en ce que l'ouverture (21) est mis dans la deuxième tranche (20) par décapage anisotrope chimique par voie humide et en ce que la deuxième tranche (20) augmente la dimension de la surface du capteur dans au moins un axe suffisamment grand pour que dans cet axe on soit assuré d'avoir un écoulement laminaire sur la surface.

6. Capteur selon la revendication 5, caractérisé en ce que sur la surface (6) de l'élément de capteur (10) est disposée au moins une résistance (14, 15, 16) dépendante de la température.

7. Capteur selon la revendication 6, caractérisé en ce qu'on a des moyens servant à chauffer l'une au moins des résistances (14, 15, 16).

8. Capteur selon la revendication 6 ou 7, caractérisé en ce qu'il y a des moyens servant à exploiter la variation des résistances de l'une au moins des résistances (14, 15, 16).

9. Capteur selon l'une des revendications 5 à 8, caractérisé en ce que l'élément de capteur (10) dans la zone dans laquelle est disposée l'une au moins des résistances (14, 15, 16) a une épaisseur réduite.
